# NEUE EUROPÄISCHE PATENTSCHRIFT

(11) **EP 1 092 473 B2**
(45) Veröffentlichungstag und Bekanntmachung des Hinweises auf die Entscheidung über den Einspruch: **20.02.2008**
(45) Hinweis auf die Patenterteilung: 19.01.2005
(21) Anmeldenummer: 00106169.6
(22) Anmeldetag: 21.03.2000
(51) Int. Cl.: B01L 3/02, G01F 25/00

(54) **Vorrichtung zur gravimetrischen Prüfung von Mehrkanalpipetten**
Device for gravimetric testing of multichannel pipettes
Dispositif de test gravimétrique de pipettes à canaux multiples

(30) Priorität: 12.10.1999 DE 29917940 U
(43) Veröffentlichungstag der Anmeldung: 18.04.2001
(73) Patentinhaber: Fraunhofer-Gesellschaft zur Förderung der angewandten Forschung e.V., 80686 München (DE)
(72) Erfinder: Lochner, Karl-Heinz Dr., 97877 Wertheim (DE); Weingärtner, Thomas, 97218 Gerbrunn (DE)
(74) Vertreter: Reitzle, Helmut

(56) Entgegenhaltungen:
- DE-A- 4 437 610
- DE-U- 8 802 035
- US-A- 4 896 270
- US-A- 5 492 673

## Beschreibung

Die Erfindung betrifft eine Vorrichtung zur gravimetrischen Prüfung von Mehrkanalpipetten, welche zwei oder mehr Pipettenkanäle aufweisen.

In Laboratorien, insbesondere der Biowissenschaften und der Medizin, werden häufig Mehrkanalpipetten eingesetzt. Ein wesentlicher Vorteil der Mehrkanalpipetten, welche in der Regel 4, 8 oder 12 Kanäle aufweisen, besteht darin, daß weniger Pipettiervorgänge notwendig sind. Dies ermöglicht ein wesentlich schnelleres und effizienteres Arbeiten.

Eine Ausführungsform von Mehrkanalpipetten sind Kolbenhubpipetten mit Luftpolster, welche das Übertragen von Flüssigkeitsmengen im Mikroliterbereich erlauben. Durch eine aufsteckbare Kunststoffspitze und das Luftpolster kann bei derartigen Kolbenhubpipetten eine Kontamination der Pipette, z.B. durch radioaktives oder infektiöses Material, vermieden werden.

Hersteller von Mehrkanalpipetten müssen deren Meßgenauigkeit mit einer Konformitätsbescheinigung nachweisen. Außerdem müssen zertifizierte Laboratorien nach DIN EN ISO 9000 ihre Prüfmittel, wozu auch die Mehrkanalpipetten gehören, regelmäßig auf ihre Meßgenauigkeit hin überprüfen.

Bei Mehrkanalpipetten wird bei der Überprüfung der Meßgenauigkeit in der Regel nach DIN 12650 vorgegangen. Bei der gravimetrischen Prüfung nach DIN 12650-6 beispielsweise werden zuerst alle Kanäle einer Kolbenhubpipette mit Spitzen bestückt. Zur Vorbefeuchtung des Luftpolsters in Spitze und Pipette muß vor Beginn der Prüfung zur Konditionierung fünfmal mit Wasser pipettiert werden. Beim Pipettieren ist darauf zu achten, daß alle Kanäle gefüllt werden, um Fehler durch Kippeffekte infolge ungleichmäßiger Belastung der einzelnen der Kanäle zu vermeiden. Anschließend wird der Inhalt eines jeden Kanals in ein tariertes Wägegefäß pipettiert und durch Wägung das pipettierte Wasservolumen bestimmt.

Pro Kanal sind nach DIN 12650-6 zehn Messungen vorgeschrieben. Da Mehrkanalkolbenhubpipetten immer eine Volumeneinstellmöglichkeit besitzen, muß die Prüfung beim Nennvolumen, dem halben Nennvolumen sowie dem kleinsten einstellbaren Volumen erfolgen. Während bei Einkanalpipetten mit festem Volumen nur zehn Messungen nötig sind, sind bei einer 12-Kanalkolbenhubpipette somit 360 Messungen erforderlich. Während bei einer Einkanalpipette die Prüfdauer ungefähr 15 bis 20 Minuten beträgt, werden bei einer 12-Kanalkolbenhubpipette etwa 10 bis 12 Stunden benötigt.

Dieser hohe Zeitaufwand bei herkömmlichen Prüfverfahren für Mehrkanalpipetten stellt einen großen Nachteil dieser Prüfverfahren dar. Auch die Auswertung der herkömmlichen Prüfverfahren nimmt viel Zeit in Anspruch.

Ausgehend von diesen Nachteilen des Standes der Technik liegt der Erfindung die Aufgabe zugrunde, eine Vorrichtung anzugeben, welche eine weitgehend automatisierbare hochgenaue Prüfung einer Mehrkanalpipette erlaubt und die für die Prüfung notwendige Zeit verkürzt. Weiterhin soll die Vorrichtung eine automatische Auswertung der Prüfergebnisse ermöglichen.

Diese Aufgabe wird gelöst durch eine Vorrichtung nach dem Hauptanspruch. Die abhängigen Ansprüche betreffen vorteilhafte Ausgestaltungen und Weiterbildungen der Erfindung.

Es wird eine Vorrichtung zur gravimetrischen Prüfung von Mehrkanalpipetten vorgeschlagen, welche pro Pipettenkanal eine Aufnahme für das in der Pipettenspitze enthaltene Prüfvolumen oder für ein Behältnis, in welches das Prüfvolumen pipettiert wird, umfaßt. Weiterhin weist die Vorrichtung pro Aufnahme eine Wägezelle zum Wiegen des Behältnisses oder des Prüfvolumens oder zum gleichzeitigen Wägen von Behältnis und Prüfvolumen auf. Als erfindungsgemäße Wägezellen eigenen sich sämtliche herkömmlichen Wägezellen, beispielsweise nach dem Meßprinzip der elektromagnetischen Kraftkompensation. Derartige Wägezellen erreichen Auflösungen von 0,01 mg (Halbmikrowägezellen) oder 0,001 mg (Mikrowägezellen). Derartige Mikrowägezellen besitzen jedoch gewöhnlich eine derartige Größe, daß sie nicht mehr mit demselben Abstand nebeneinander angeordnet werden können, wie die lineare Anordnung der einzelnen Kanäle einer Mehrkanalpipette.

Dieses Problem wird nunmehr dadurch gelöst, daß jede Aufnahme über ein Gestänge und/oder über eine Hebelanordnung mit der zugeordneten Wägezelle gemäß Anspruch 1 verbunden ist. Damit ist es möglich, die Wägezellen völlig unabhängig von der geometrischen Anordnung der einzelnen Aufnahmen anzuordnen und so auch Wägezellen einsetzen zu können, die einen hohen Platzbedarf haben.

Dies bedeutet, daß die Wägezellen mit einem Abstand größer als der Abstand benachbarter Pipettenkanäle der Mehrkanalpipette angeordnet werden können oder auch in verschiedenen Ebenen oder auch ring- oder sternförmig die zugeordneten Aufnahmen umgebend.

Mit einer derartigen Vorrichtung läßt sich der für die Prüfung der Mehrkanalpipette benötigte Zeitaufwand drastisch reduzieren, weil eine parallele Messung und Auswertung der einzelnen Pipettenkanäle erfolgen kann. Erfindungsgemäß wird somit sowohl das Pipettieren als auch das Wägen für alle Pipettenkanäle der Mehrkanalpipette gleichzeitig durchgeführt. Weiterhin ist es bei Verwendung der erfindungsgemäßen Vorrichtung möglich, eine vollautomatische Auswertung der Wägeergebnisse vorzunehmen. Für die komplette Prüfung einer 12-Kanalpipette und die Auswertung der Meßergebnisse läßt sich die Prüfzeit daher deutlich senken.

Das durch einen Pipettenkanal dosierte Prüfvolumen kann entweder direkt in eine entsprechend ausgebildete Aufnahme pipettiert werden oder aber in ein separates Behältnis, welches zur Messung von der Aufnahme aufgenommen wird. Jede Aufnahme ist dabei über ein Gestänge oder eine Hebelanordnung mit der Wägezelle verbunden sein. Die jeweilige Ausgestaltung der Verbindung zwischen Aufnahme und Wägezelle hängt dabei insbesondere von der Art der verwendeten Wägezelle ab. Durch eine geeignete Wahl der Wägezellenart und der Verbindung zwischen Aufnahme und Wägezelle läßt sich die erfindungsgemäße Vorrichtung zur Prüfung einer Vielzahl unterschiedlicher, handelsüblicher Mehrkanalpipetten einsetzen.

Weitere Vorteile und Ausgestaltungen der Erfindung ergeben sich aus den Ausführungsbeispielen und den Figuren. Es zeigen:
- Figur 1: die Seitenansicht einer Prüfvorrichtung;
- Figur 2: eine Aufsicht der Wägeeinheit der Prüfvorrichtung von Figur 1;
- Figur 3: die Anordnung von Wägezellen und Aufnahmen gemäß einem ersten Ausführungsbeispiel;
und
- Figuren 4 und 5: zwei Ausführungsbeispiele der Verbindung zwischen Aufnahme und Wägezelle.

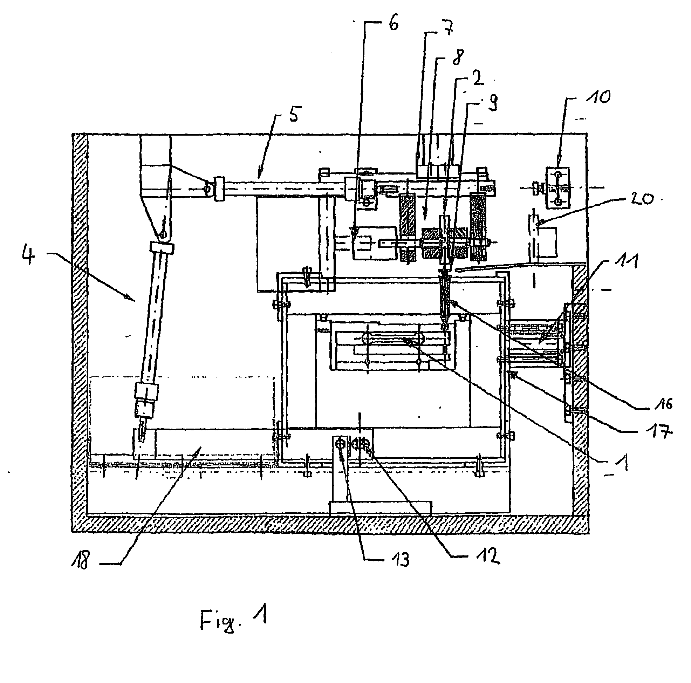

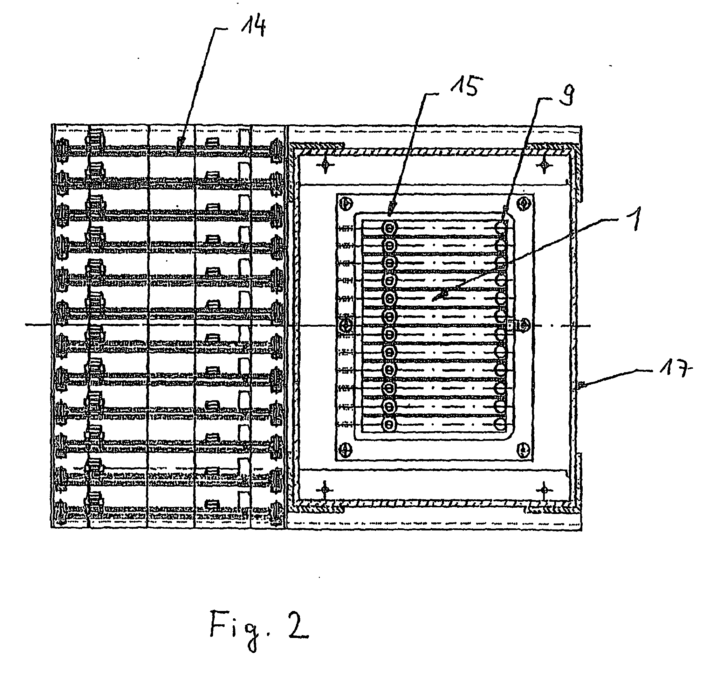

Figuren 1 und 2 zeigen keine Ausführungsformen der Erfindung, sind jedoch hilfreich zum Veständnis bestimmter Aspekte der Erfindung.

In Figur 1 ist eine Vorrichtung zur gravimetrischen Prüfung von Mehrkanalpipetten mit zwei oder mehr Pipettenkanälen in einer Seitenansicht dargestellt. Die Vorrichtung weist gemäß Figur 2 zwölf nebeneinander angeordnete Wägezellen 1 in Form von Dehnungsmeßstreifen auf. Die Gesamtheit der Wägezellen 1 ist in einem Gehäuse 17 angeordnet, welches die Wägezellen 1 vor Umwelteinflüssen schützt. Das Gehäuse 17 weist pro Wägezelle 1 eine rohrförmige Durchbrechung 16 auf, durch welche jeweils ein stangenförmiges Element geführt ist. Über das stangenförmige Element ist jede Wägezelle 1 mit einer als Aufnahmeteller 9 ausgebildeten Aufnahme verbunden. Die einzelnen Wägezellen 1 selbst sind über Befestigungen 15 mit dem Gehäuse 17 verbunden. Außerdem weist das Gehäuse 17 in den Figuren 1 und 2 nicht dargestellte Durchbrechungen auf, über welche jede Wägezelle 1 mit einer Verstärkerplatine 14 verbunden ist.

Bei der in den Figuren 1 und 2 dargestellten Prüfvorrichtung beträgt der Abstand benachbarter Wägezellen 1 ungefähr 9 mm und entspricht damit dem Abstand benachbarter Pipettenkanäle der Mehrkanalpipette. Die Prüfvorrichtung besitzt weiterhin eine Halterung 8 zur Aufnahme der Behältnisse 2, welche wiederum die Prüfvolumina aufnehmen. Die Behältnisse 2 sind als Glasröhrchen, aus Metall oder einem anderen Material ausgebildet. Die Halterung 8 umfaßt zwei backenförmige Elemente, welche jeweils für jedes Behältnis 2 eine halbkreisförmige Aussparung aufweisen. Die backenförmigen Elemente können durch einen Antrieb 6 relativ zueinander bewegt werden. Mit Hilfe des Antriebes 6 können die beiden backenförmigen Elemente der Halterung 8 zwischen einer ersten Stellung, in welcher sie die Behältnisse 2 umschließen, und einer zweiten Stellung, in welcher sie die Behältnisse 2 freigeben, bewegt werden. Der Antrieb 6 ist als Pneumatikantrieb ausgebildet.

Der Antrieb 6 und die Halterung 8 mit den beiden bakkenförmigen Elementen wiederum lassen sich mit Hilfe eines weiteren Pneumatikantriebes 5 zwischen einer Probenaufnahmeposition und einer Wägeposition bewegen. In Figur 1 befindet sich die Halterung 8 in Wägeposition, d.h. die Behältnisse 2 sind über den Aufnahmetellern 9 angeordnet. Mit dem Behältnis 20 ist die Probenaufnahmeposition angedeutet, in welcher sich die in der Halterung 8 angeordneten Behältnisse 20 befinden, wenn sie befüllt werden. Der Antrieb 5 umfaßt einen Pneumatikzylinder, welcher die Halterung 8 mit Hilfe der Führung 7 und des Anschlages 10 zwischen der Probenaufnahmeposition und der Wägeposition hin und her bewegt.

Schließlich umfaßt die dargestellte Vorrichtung zur gravimetrischen Prüfung noch einen weiteren Antrieb 4, welcher über eine Hebelanordnung eine Relativbewegung zwischen Halterung 8 und Wägezellen 1 ermöglicht. Im vorliegenden Fall wird über den Pneumatikzylinder 4 ein Hebel 18 bewegt, welcher an einer Position 13 schwenkbar gelagert ist. Derjenige Hebelarm des Hebels 18, welcher dem Pneumatikzylinder 4 gegenüberliegend angeordnet ist, weist ein Lager 12 zur drehbaren Lagerung des Gehäuses 17 auf. Eine Bewegung des Pneumatikzylinders 4 bewirkt, daß das Gehäuse 17 und damit jede Wägezelle 1 entlang einer parallelen Führung 11 in Richtung auf die Halterung 8 zu- und von der Halterung 8 wegbewegt werden kann.

Die Prüfung einer Mehrkanalpipette läuft derart ab, daß die Halterung 8 über den Pneumatikzylinder 5 zunächst in die Probenaufnahmeposition gefahren wird. Über den Pneumatikzylinder 6 werden die beiden Backen der Halterung 8 geöffnet und zwölf nebeneinander angeordnete Glasröhrchen 20 in den Bereich zwischen den beiden Backen eingebracht. Anschließend werden durch den Pneumatikzylinder 6 die beiden Backen der Halterung 8 aufeinander zubewegt, so daß die Backen die Glasröhrchen 20 sicher umschließen. Daraufhin werden mit Hilfe der zu prüfenden Mehrkanalpipette die Glasröhrchen 20 mit den Probevolumina befüllt. Es empfiehlt sich, vor der ersten Pipettierung den nachfolgend beschriebenen Wägevorgang mit den leeren Röhrchen durchzuführen, um die Glasröhrchen 2, 20 vorab zu tarieren. Zum Wägen wird der Pneumatikzylinder 5 betätigt und die Halterung 8, wie in Figur 1 dargestellt, in die Wägeposition bewegt.

Nachdem die Halterung 8 in Wägeposition gebracht wurde, werden mit Hilfe des Pneumatikzylinders 4 die Wägezellen 1 und die Aufnahmeteller 9 in Richtung auf die zwischen den Backen der Halterung 8 angeordneten Glasröhrchen 2 bewegt. Der Fahrweg der Aufnahmeteller 9 bei der Bewegung des Pneumatikzylinders 4 beträgt dabei nur wenige Millimeter. Nach der Bewegung der Aufnahmeteller 9 in Richtung auf die Glasröhrchen 2 werden mit Hilfe des Antriebes 6 die Backen der Halterung 8 geöffnet und die Glasröhrchen 2 auf den Aufnahmetellern 9 angeordnet. Daraufhin werden die einzelnen Glasröhrchen 2 mit den darin angeordneten Prüfvolumina gewogen. Die Ergebnisse des Wägevorganges werden computergesteuert erfaßt. Nach dem Abschluß des Wägevorganges werden über den Pneumatikantrieb 6 die beiden Backen der Halterung 8 wieder in Richtung auf die Glasröhrchen 2 bewegt, um diese fest zu umschließen. Daraufhin wird über den Pneumatikzylinder 4 das Gehäuse 17 mit den Wägezellen 1 und den Aufnahmetellern 9 nach unten bewegt. Abschließend werden über den Pneumatikantrieb 5 die Glasröhrchen 2 von der Wägeposition zurück in die Probenaufnahmeposition bewegt. In dieser Position werden die Backen der Halterung 8 geöffnet und die Prüfröhrchen werden entfernt. Anschließend können neue Prüfröhrchen zwischen den Backen angeordnet werden und der oben geschilderte Vorgang erneut durchgeführt werden. Alternativ hierzu ist es auch möglich, wenn die Glasröhrchen 2, 20 ein ausreichendes Volumen aufweisen, erneut in dieselben Glasröhren, welche bereits Prüfvolumina von dem vorhergehenden Pipettiervorgang enthalten, zu pipettieren.

Gemäß Figuren 1 und 2 wurden für den Antrieb der Bakken der Halterung 8, der Halterung 8 selbst sowie der Wägezellen 1 Pneumatikzylinder verwendet. Alternativ oder zusätzlich zu der Pneumatikanordnung können jedoch auch Schrittmotoren, Servomotoren und/oder andere Motoren verwendet werden. Weiterhin ist es denkbar, die Halterung 8 als Arm auszuführen, wobei an einem ersten Ende des Armes die beiden Backen zur Aufnahme der Röhrchen angeordnet sind und an einem anderen Ende hängend gelagerte Kalibriergewichte angeordnet sind. Der Arm sollte eine solche Länge aufweisen, daß sich die Kalibriergewichte in Wägeposition, d.h. oberhalb der Aufnahmeteller 9 befinden, wenn die die Glasröhrchen umschließenden Backen in der Probenaufnahmeposition angeordnet sind. Auf diese Weise ist es möglich, während des Pipettiervorganges die Wägezellen 1 mit den Aufnahmetellern 9 in Richtung auf die Kalibriergewichte zu bewegen, um eine Kalibrierung der Wägezellen 1 durchzuführen.

Vorteilhafterweise weisen die Glasröhrchen 2, 20 eine sich nach oben verjüngende Öffnung auf, um durch Verdunstung verursachte Meßfehler weitestgehend zu reduzieren. Eine solche Ausgestaltung der Glasröhrchen 2, 20 ist in erster Linie bei der Prüfung von Volumina unterhalb 10 µl sinnvoll. Bei größeren Volumina sind zylindrische Röhrchen 2, 20 ohne sich verjüngende Öffnungen zweckmäßig, um das Abstreifen der Pipettenspitzen zu erleichtern.

Außerdem kann die Vorrichtung noch Sensoren zur Messung von für die Bestimmung der Probenvolumina relevanten Parameter aufweisen. So ist es denkbar, die Vorrichtung mit einem Luftdrucksensor und/oder einem Lufttemperatursensor und/oder einem Prüfflüssigkeits-Temperatursensor zu versehen. Bei der Berechnung der Prüfvolumina müssen die Wägewerte der Wägezellen 1 noch einer Luftauftriebskorrektur unterzogen werden. Die für diese Luftauftriebskorrektur benötigten Daten Luftdruck und Lufttemperatur können von einem Rechner vollautomatisch erfaßt werden und zur automatischen Berechnung der Prüfmasse herangezogen werden. Aus der Prüfflüssigkeitstemperatur wird auf automatischem Wege über ein Polynom oder über eine Tabelle die Dichte ermittelt. Aus der Masse und der Dichte der Prüfflüssigkeit wiederum erhält man deren Volumen. Im Anschluß an die Prüfung wird dann durch den Rechner ein Prüfprotokoll erstellt und ausgedruckt.

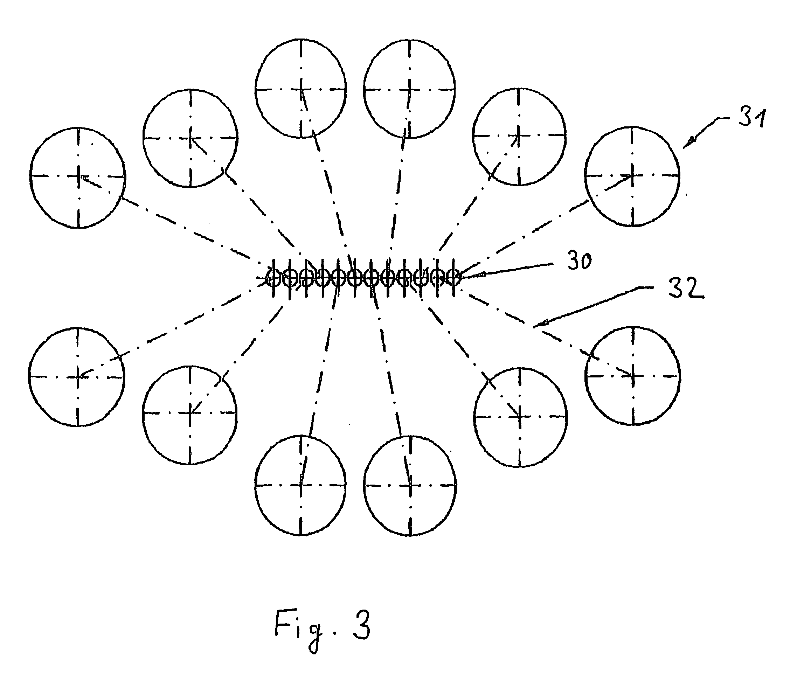

In Figur 3 ist ein Ausführungsbeispiel einer erfindungsgemäßen Anordnung der Wägezellen 31 und der Aufnahmeteller 30 dargestellt, wobei es sich um eine Abwandlung der in Figur 1 und 2 dargestellten Vorrichtung handelt. In der Praxis hat sich nämlich gezeigt, daß zwar Wägezellen mit einem Dehnungsmeßstreifen, wie in Figur 2 dargestellt, eng nebeneinander angeordnet werden können. Bei anderen Wägeprinzipien, welche erfindungsgemäß ebenfalls zum Einsatz kommen können, ist die in Figur 2 dargestellte Konfiguration jedoch nicht realisierbar. Wägezellen, welche beispielsweise nach dem Prinzip der elektromagnetischen Kraftkompensation arbeiten, weisen regelmäßig einen Durchmesser von einigen Zentimetern auf. Wenn die Aufnahmen 30 direkt auf den Wägezellen 31 aufliegen würden, hätte dies zur Folge, daß der Abstand benachbarter Wägezellen und benachbarter Aufnahmen größer als der Abstand benachbarter Pipettenkanäle der Mehrkanalpipette wäre. Dies würde ein paralleles Pipettieren in eine Vielzahl von Gefäßen oder Aufnahmen 30 unmöglich machen.

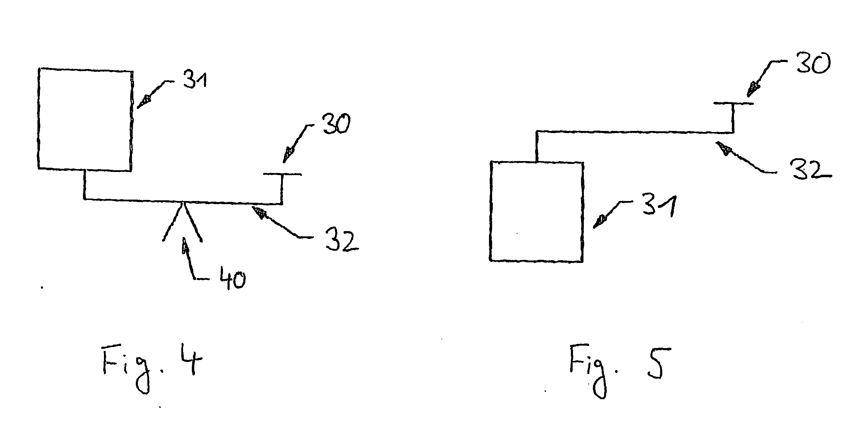

Aus diesem Grund wird, wie in Figur 3 dargestellt, vorgeschlagen, die Aufnahmen 30 im Abstand der Pipettenkanäle anzuordnen und die Wägezellen 31 horizontal beabstandet von den zugeordneten Aufnahmen 30 vorzusehen und mit den Aufnahmen 30 über Gestänge 32 bzw. über Hebelanordnungen 32, 40 (siehe Figur 4 und 5) zu verbinden. Gemäß diesem Ausführungsbeispiel schließen benachbarte Gestänge 32 bzw. Hebelanordnungen 32, 40 von den jeweils zugeordneten Aufnahmen 30 aus gesehen einen Winkel von > 0° ein. Dies bedeutet, daß die Gestänge 32 bzw. die Hebelanordnungen 32, 40 nicht parallel zueinander verlaufen. Durch eine derartige aufgefächerte Verteilung der Gestänge 32 bzw. der Hebelanordnungen 32, 40 können auch Wägezellen 31, deren Durchmesser größer als der Abstand benachbarter Pipettenkanäle ist, zur parallelen Ermittlung von Prüfvolumina verwendet werden. Anstatt oder zusätzlich zu der Auffächerung in der Horizontalen ist auch eine Auffächerung in der Vertikalen möglich. Dies bedeutet, daß die Wägezellen 31 und die Gestänge 32 bzw. Hebelanordnungen 32, 40 dann in unterschiedlichen Höhen angeordnet sind. In diesem Fall können die Gestänge 32 auch parallel zueinander verlaufen.

Wie in Figur 4 dargestellt, kann das in Figur 3 abgebildete Gestänge 32 in einem Lager 40 gelagert sein. Die auf das Wägeteller 30 ausgeübte Kraft wird daher über eine Hebelanordnung 32, 40 auf die Wägezelle 31 übertragen. Eine in Figur 5 dargestellte Ausführungsform sieht vor, die auf das Aufnahmeteller 30 wirkende Gewichtskraft über das Gestänge 32 direkt auf die Wägezelle 31 zu übertragen.

Eine Wägeanordnung nach den Figuren 3, 4 und 5 kann die in den Figuren 1 und 2 innerhalb des Gehäuses 17 angeordnete Wägeanordnung ersetzen. Größere Modifikationen außerhalb des Gehäuses 17 sind bei der in den Figuren 1 und 2 dargestellten Prüfvorrichtung dabei nicht erforderlich, so daß alle anderen Elemente der Figuren 1 und 2 in gleicher oder entsprechender Weise bei den Ausführungsformen nach den Figuren 3 bis 5 vorgesehen sind.

Vorteilhafterweise umfaßt die Vorrichtung noch einen Rechner zur Steuerung der gravimetrischen Prüfung sowie zur Auswertung der Sensordaten und der ermittelten Wägeergebnisse.

## Patentansprüche

1. Vorrichtung zur gravimetrischen Prüfung von Mehrkanalpipetten, welche zwei oder mehr Pipettenkanäle aufweisen, mit
pro Pipettenkanal einer Aufnahme (9, 30) für ein Prüfvolumen oder für ein das Prüfvolumen enthaltendes Behältnis (2, 20),
pro Aufnahme (9, 30) einer Wägezelle (1, 31) zum Wiegen des Behältnisses (2, 20) und/oder des Prüfvolumens,
wobei jede Aufnahme (9, 30) über ein Gestänge (32) und/oder über eine Hebelanordnung (40) mit der zugeordneten Wägezelle (1, 31) verbunden ist und wobei
benachbarte Gestänge (32) oder Hebelanordnungen (32, 40) von den zugeordneten Aufnahmen (9, 30) aus gesehen einen Winkel > 0° einschließen und/oder in verschiedenen Ebenen angeordnet sind.

2. Vorrichtung nach dem vorhergehenden Anspruch, **dadurch gekennzeichnet, daß** der Abstand benachbarter Wägezellen (1, 31) größer als der Abstand benachbarter Pipettenkanäle der Mehrkanalpipette ist.

3. Vorrichtung nach einem der vorhergehenden Ansprüche, **dadurch gekennzeichnet, daß** die Wägezellen (1, 31) mit Dehnungsmeßstreifen, nach dem Prinzip der elektromagnetischen Kraftkompensation oder nach einem anderen Prinzip arbeiten.

4. Vorrichtung nach einem der vorhergehenden Ansprüche, **dadurch gekennzeichnet, daß** die Vorrichtung eine Halterung (8) für die Behältnisse (2, 20) aufweist.

5. Vorrichtung nach dem vorhergehenden Anspruch, **dadurch gekennzeichnet, daß** die Halterung (8) zwischen einer Probenaufnahmeposition und einer Wägeposition bewegbar ist.

6. Vorrichtung nach dem vorhergehenden Anspruch, **dadurch gekennzeichnet, daß** die Halterung (8) am Ende eines Armes angeordnet ist, welcher an seinem anderen Ende eine Aufnahme für beweglich gelagerte Kalibriergewichte aufweist, wobei der Arm derart ausgelegt ist, daß sich die Kalibriergewichte in der Wägeposition befinden, wenn sich die Halterung (8) in der Probenaufnahmeposition befindet.

7. Vorrichtung nach einem der Ansprüche 4 bis 6, **dadurch gekennzeichnet, daß** die Halterung (8) zwei Backen aufweist, wobei die Backen zwischen einer Stellung, in welcher sie die Behältnisse (2, 20) umschließen, und einer Stellung, in welcher sie die Behältnisse (2, 20) freigeben, bewegbar sind.

8. Vorrichtung nach einem der Ansprüche 4 bis 7, **dadurch gekennzeichnet, daß** die Wägezellen (1, 31) und die Halterung (8) relativ zueinander bewegbar sind.

9. Vorrichtung nach einem der Ansprüche 5 bis 8, **dadurch gekennzeichnet, daß** die Vorrichtung mindestens eine Pneumatikanordnung und/oder mindestens einen Schrittmotor und/oder mindestens einen Servomotor als Antrieb (4, 5, 6) für die Halterung (8) und/oder die Backen der Halterung (8) und/oder die Wägezellen (1, 31) umfassen.

10. Vorrichtung nach einem der vorhergehenden Ansprüche, **dadurch gekennzeichnet, daß** die Wägezellen (1, 31) von einem separaten Gehäuse (17) umgeben sind.

11. Vorrichtung nach dem vorhergehenden Anspruch, **dadurch gekennzeichnet, daß** das Gehäuse (17) eine Durchbrechung (16) aufweist, in welcher ein Gestänge führbar ist, welches die Wägezellen (1, 31) mit den zugeordneten Aufnahmen (9, 30) verbindet.

12. Vorrichtung nach einem der vorhergehenden Ansprüche, **dadurch gekennzeichnet, daß** die Vorrichtung mindestens einen Sensor zur Messung der für die Bestimmung der Probenvolumina relevanten Parameter aufweist.

13. Vorrichtung nach dem vorhergehenden Anspruch, **dadurch gekennzeichnet, daß** ein Luftdrucksensor und/oder ein Prüfflüssigkeits-Temperatursensor und/oder ein Lufttemperatursensor vorhanden sind.

14. Vorrichtung nach einem der vorhergehenden Ansprüche, **dadurch gekennzeichnet, daß** die Vorrichtung einen Rechner zur Steuerung der gravimetrischen Prüfung und/oder zur Auswertung der Sensordaten und/oder zur Auswertung der Prüfergebnisse aufweist.

15. Vorrichtung nach einem der vorhergehenden Ansprüche, **dadurch gekennzeichnet, daß** die Behältnisse (2, 20) sich zur Behältnisöffnung hin verjüngen.

## Claims

1. Device for the gravimetric testing of multi-channel pipettes, which have two or more pipette channels, said device having
per pipette channel, one receptacle (9, 30) for a test volume or for a container (2, 20) containing the test volume,
per receptacle (9, 30), one weighing cell (1, 31) for weighing the container (2, 20) and/or the test volume,
wherein each receptacle (9, 30) is connected to the associated weighing cell (1, 31) by a linkage (32) and/or by a lever arrangement (40),
and wherein
adjacent linkages (32) or lever arrangements (32, 40), when viewed from the associated receptacles (9, 30), enclose an angle > 0° and/or are arranged in different planes.

2. Device according to the preceding claim, **characterised in that** the spacing of adjacent weighing cells (1, 31) is greater than the spacing of adjacent pipette channels of the multi-channel pipette.

3. Device according to one of the preceding claims, **characterised in that** the weighing cells (1, 31) operate with wire strain gauges, according to the principle of electromagnetic force compensation or according to some other principle.

4. Device according to one of the preceding claims, **characterised in that** the device has a mount (8) for the containers (2, 20).

5. Device according to the preceding claim, **characterised in that** the mount (8) can be moved between a sampling position and a weighing position.

6. Device according to the preceding claim, **characterised in that** the mount (8) is arranged at the end of an arm which has at its other end a receptacle for movably mounted calibration weights, the arm being so designed that the calibration weights are located in the weighing position when the mount (8) is in the sampling position.

7. Device according to one of claims 4 to 6, **characterised in that** the mount (8) has two jaws, the jaws being movable between a position in which they surround the containers (2, 20) and a position in which they release the containers (2, 20).

8. Device according to one of claims 4 to 7, **characterised in that** the weighing cells (1, 31) and the mount (8) can be moved relative to each other.

9. Device according to one of claims 5 to 8, **characterised in that** the device includes at least one pneumatic arrangement and/or at least one stepper motor and/or at least one servomotor as the drive unit (4, 5, 6) for the mount (8) and/or the jaws of the mount (8) and/or the weighing cells (1,31).

10. Device according to one of the preceding claims, **characterised in that** the weighing cells (1, 31) are surrounded by a separate housing (17).

11. Device according to the preceding claim, **characterised in that** the housing (17) has an opening (16) in which a linkage can be guided which connects the weighing cells (1, 31) to the associated receptacles (9, 30).

12. Device according to one of the preceding claims, **characterised in that** the device has at least one sensor for measuring the relevant parameters for determining the sample volumes.

13. Device according to the preceding claim, **characterised in that** an air pressure sensor and/or a test liquid temperature sensor and/or an air temperature sensor are provided.

14. Device according to one of the preceding claims, **characterised in that** the device has a computer to control the gravimetric testing and/or to evaluate the sensor data and/or to evaluate the test results.

15. Device according to one of the preceding claims, **characterised in that** the containers (2, 20) taper towards the container opening.

## Revendications

1. Dispositif permettant le contrôle gravimétrique de pipettes multicanaux, qui présentent deux canaux de pipette ou plus,
comportant, pour chaque canal de pipette, un logement (9, 30) destiné à un volume contrôlé ou à un récipient (2, 20) contenant le volume contrôlé,
pour chaque logement (9, 30), une cellule de pesage (1, 31) permettant de peser le récipient (2, 20) et/ou le volume contrôlé,
dans lequel chaque logement (9, 30) est relié à la cellule de pesage (1, 31) associée par l'intermédiaire d'une tige (32) et/ou d'un agencement de levier (40),
et dans lequel les tiges (32) ou agencements de levier (32, 40) voisins des logements (9, 30) associés forment un angle supérieur à 0° les uns par rapport aux autres et/ou sont disposés dans des plans différents.

2. Dispositif selon l'une quelconque des revendications précédentes, **caractérisé en ce que** la distance entre les cellules de pesage (1, 31) voisines est supérieure à la distance entre les canaux de pipette voisins de la pipette multicanaux.

3. Dispositif selon l'une quelconque des revendications précédentes, **caractérisé en ce que** les cellules de pesage (1, 31), comportant des bandes de mesure extensibles, fonctionnent selon le principe de la compensation de forces électromagnétique ou selon un autre principe.

4. Dispositif selon l'une quelconque des revendications précédentes, **caractérisé en ce que** le dispositif présente un support (8) destiné aux récipients (2, 20).

5. Dispositif selon l'une quelconque des revendications précédentes, **caractérisé en ce que** le support (8) est mobile entre une position de prélèvement d'échantillons et une position de pesage.

6. Dispositif selon l'une quelconque des revendications précédentes, **caractérisé en ce que** le support (8) est disposé à l'extrémité d'un bras qui présente, au niveau de son autre extrémité, un logement destiné aux poids d'étalonnage disposés de manière mobile, sachant que le bras est défini de telle sorte que les poids d'étalonnage se trouvent dans la position de pesage lorsque le support (8) se trouve dans la position de prélèvement d'échantillons.

7. Dispositif selon l'une quelconque des revendications 4 à 6, **caractérisé en ce que** le support (8) présente deux brides, sachant que les brides peuvent se déplacer entre une position dans laquelle elles maintiennent les récipients (2, 20) et une position dans laquelle elles libèrent les récipients (2, 20).

8. Dispositif selon l'une quelconque des revendications 4 à 7, **caractérisé en ce que** les cellules de pesage (1, 31) et le support (8) sont en mesure de se déplacer les uns par rapport aux autres.

9. Dispositif selon l'une quelconque des revendications 5 à 8, **caractérisé en ce que** le dispositif comporte au moins un agencement pneumatique et/ou au moins un moteur pas à pas et/ou au moins un servomoteur comme entraînement (4, 5, 6) pour le support (8) et /ou les brides du support (8) et/ou les cellules de pesage (1, 31).

10. Dispositif selon l'une quelconque des revendications précédentes, **caractérisé en ce que** les cellules de pesage (1, 31) sont entourées par un boîtier (17) séparé.

11. Dispositif selon l'une quelconque des revendications précédentes, **caractérisé en ce que** le boîtier (17) présente un ajour (16), dans lequel peut être guidée une tige, qui relie les cellules de pesage (1, 31) aux logements (9, 30) associés.

12. Dispositif selon l'une quelconque des revendications précédentes, **caractérisé en ce que** le dispositif présente au moins un capteur permettant de mesurer les paramètres pertinents pour déterminer les volumes des échantillons.

13. Dispositif selon l'une quelconque des revendications précédentes, **caractérisé en ce qu'**un capteur de pression d'air et/ou un capteur de température de liquide contrôlé et/ou un capteur de température de l'air sont présents.

14. Dispositif selon l'une quelconque des revendications précédentes, **caractérisé en ce que** le dispositif présente un ordinateur permettant de commander le contrôle gravimétrique et/ou d'évaluer les données du capteur et/ou d'évaluer les résultats du contrôle.

15. Dispositif selon l'une quelconque des revendications précédentes, **caractérisé en ce que** les récipients (2, 20) se rétrécissent vers l'ouverture du récipient.
